# EUROPÄISCHE PATENTSCHRIFT

(11) **EP 2 857 740 B1**
(45) Veröffentlichungstag und Bekanntmachung des Hinweises auf die Patenterteilung: **10.07.2019**
(21) Anmeldenummer: 14184996.8
(22) Anmeldetag: 16.09.2014
(51) Int. Cl.: F21S 43/239, F21V 8/00, B60Q 1/26, F21Y 113/10, F21S 43/243, F21S 43/249, F21S 43/40

(54) **Kfz-Beleuchtungseinrichtung**
Motor vehicle lighting device
Dispositif d'éclairage de véhicule automobile

(30) Priorität: 02.10.2013 DE 102013220106
(43) Veröffentlichungstag der Anmeldung: 08.04.2015
(73) Patentinhaber: Automotive Lighting Reutlingen GmbH, 72762 Reutlingen (DE)
(72) Erfinder: Hogrefe, Henning, 72141 Walddorfhäslach (DE); Lampen, Martin, 72072 Tübingen (DE)
(74) Vertreter: DREISS Patentanwälte PartG mbB

(56) Entgegenhaltungen:
- EP-A1- 1 881 263
- EP-A1- 2 169 296
- EP-A1- 2 738 453
- EP-A2- 2 541 128
- EP-A2- 2 607 774
- DE-A1-102012 219 647
- US-A1- 2011 085 344

## Beschreibung

Die Erfindung betrifft eine Beleuchtungseinrichtung für Kraftfahrzeuge (Kfz) nach dem Oberbegriff des Anspruchs 1.

Bei Beleuchtungseinrichtungen für Kraftfahrzeuge ist es oftmals erwünscht, das von der jeweiligen Lichtquelle ausgestrahlte Licht mit einer Primäroptik oder Vorsatzoptik in eine geeignete Lichtverteilung umzuformen. Diese Lichtverteilung kann dann mit einer Sekundäroptik, z.B. einer Projektionslinse, in eine Abstrahllichtverteilung der Beleuchtungseinrichtung umgeformt werden. Für die Abstrahllichtverteilung können je nach Anwendungsgebiet einzuhaltende gesetzliche Vorgaben bestehen.

Aus der EP 2 541 128 A2 ist eine gattungsgemäße Beleuchtungsvorrichtung bekannt. Beispielsweise aus der DE 10 2011 089 481 A1 ist eine Beleuchtungseinrichtung mit einer Lichtquelle und einem Lichtleiter bekannt. Derartige Beleuchtungseinrichtungen zeichnen sich durch eine hohe lichttechnische Effizienz aus. Dies ist u.a. darauf zurückzuführen, dass das durch die Lichteinkoppelstelle in den Lichtleiter eingekoppelte Licht nach Reflexion an dem rückwärtigen Sammelreflektor in dem Lichtleiter einen geordneten, insbesondere kollimierten, Verlauf aufweist.

Die Intensität der erzielbaren Abstrahllichtverteilung ist jedoch begrenzt. Die Verwendung einer Mehrzahl von Lichtquellen ist bei den bekannten Anordnungen nicht ohne Weiteres möglich, da die eine, mittig im Lichtleiter angeordnete Einkoppelstelle nicht ausreichend Raum für eine Mehrzahl von Lichtquellen bietet.

Der Erfindung liegt die Aufgabe zugrunde, die bekannten Beleuchtungseinrichtungen dahingehend zu verbessern, dass die Einkopplung von Licht einer Mehrzahl von Lichtquellen ermöglicht wird und dabei die vorteilhaften optischen Eigenschaften und die hohe lichttechnische Effizienz beibehalten wird.

Diese Aufgabe wird durch eine Beleuchtungseinrichtung gemäß Anspruch 1 gelöst. Vorteilhafte Ausgestaltungen ergeben sich aus den Unteransprüchen und der nachfolgenden Beschreibung.

Die Beleuchtungseinrichtung umfasst einen plattenartig und vorzugsweise flach ausgebildeten Lichtleiter mit einer ersten Lichtleitfläche und einer diesen gegenüberliegenden zweiten Lichtleitfläche, welche den Lichtleiter derart begrenzen, dass in dem Lichtleiter Licht unter interner Totalreflexion an den Lichtleitflächen geleitet werden kann. Der Lichtleiter weist einen vorderseitigen Lichtaustrittsabschnitt und eine Sammelreflexionsfläche auf, welche zumindest eine den Lichtleiter rückwärtig begrenzende Schmalseitenfläche umfasst. Der Lichtaustrittsabschnitt weist insbesondere eine von einer vorderen, den Lichtleiter begrenzenden Schmalseitenfläche gebildete Lichtaustrittsfläche auf. Zur Einkopplung von Licht ist eine Lichteinkoppeleinrichtung des Lichtleiters vorgesehen, welche wenigstens eine Lichteinkoppelfläche und wenigstens eine Umlenkfläche aufweist. Die Umlenkfläche ist dazu eingerichtet, durch die Lichteinkoppelfläche auf die Umlenkfläche einstrahlbares Licht zu der Sammelreflexionsfläche hin umzulenken. Die Sammelreflexionsfläche ist dazu ausgebildet, das von der Umlenkfläche auf die Sammelreflexionsfläche gerichtete Licht zu dem Lichtaustrittsabschnitt hin umzulenken.

Erfindungsgemäß ist eine Mehrzahl von Lichtquellen, insbesondere LED's (Leuchtdioden) vorgesehen, wobei die Umlenkfläche in eine entsprechende Mehrzahl von Reflexionsflächenabschnitten funktional unterteilt ist. Je ein Reflexionsflächenabschnitt ist funktional jeweils einer Lichtquelle derart zugeordnet, dass zumindest ein Anteil des durch die Lichteinkoppelfläche eingekoppelten Lichts der jeweiligen Lichtquelle über dem zugeordneten Reflexionsflächenabschnitt zu der Sammelreflexionsfläche gelenkt wird. Ein gegebenenfalls übriger Anteil des Lichtes wird in Richtung des Lichtaustrittsabschnitts gelenkt.

Die Lichteinkoppeleinrichtung, insbesondere sämtliche Bestandteile der Lichteinkoppelrichtung, sind zwischen der Sammelreflexionsfläche und dem Lichtaustrittsabschnitt angeordnet. Dadurch werden die von der Umlenkfläche in verschiedene Richtungen abgelenkten Lichtstrahlen nutzbar gemacht.

Der Lichtleiter weist eine Mehrzahl von separat voneinander verlaufenden Lichtleitarmen auf, wobei jeder Lichtleitarm von einem Abschnitt der Sammelreflexionsfläche berandet ist und wobei jeder Lichtleitarm mindestens einen Reflexionsflächenabschnitt der Umlenkfläche aufweist. Der Lichtleiter ist insofern in rückwärtiger Richtung in mehrere Lichtleitarme unterteilt, welche gemeinsam in den Lichtaustrittsabschnitt münden. Die Lichtleitarme liegen schichtartig übereinander und laufen in Richtung zum Lichtaustrittsabschnitt hin zusammen. In diesem Fall liegen die Lichtleitabschnitte in Schnitten senkrecht zur Erstreckungsfläche des Lichtleiters betrachtet nebeneinander. Sie können zusätzlich noch in der Erstreckungsfläche des Lichtleiters betrachtet nebeneinander versetzt angeordnet sein.

Die durch den Lichtaustrittsabschnitt austretende Lichtverteilung wird daher durch die Mehrzahl von Lichtquellen gespeist. Das Licht jeder Lichtquelle wird durch die Lichteinkoppelfläche in den Lichtleiter eingekoppelt und trifft, ggf. nach weiteren Umlenkungen, auf den zugeordneten Reflexionsflächenabschnitt. Von diesem wird das Licht entweder in Richtung zum Lichtaustrittsabschnitt, oder in laterale oder rückwärtige Richtung umgelenkt. Die Sammelreflexionsfläche dient dazu, den lateralen oder rückwärtigen Anteil ebenfalls nach vorne zu lenken. Dadurch kann das Licht der Mehrzahl von Lichtquellen nahezu vollständig in dem Lichtleiter eingekoppelt und nahezu vollständig durch den Lichtaustrittsabschnitt ausgestrahlt werden. Die beschriebene Anordnung ermöglicht eine hohe lichttechnische Effizienz und eröffnet Gestaltungsspielraum beim Design der Beleuchtungseinrichtung.

Die verschiedenen Lichtquellen sind vorzugsweise unabhängig voneinander ansteuerbar, insbesondere an- und ausschaltbar. Denkbar ist auch, dass die verschiedenen Lichtquellen unterschiedlich ausgebildet sind, beispielsweise Licht unterschiedliche Farben ausstrahlen. Dadurch können mit der Beleuchtungseinrichtung unterschiedliche Lichtfunktionen realisiert werden.

Der Lichtleiter ist plattenartig insofern, als er als Ganzes betrachtet, ein flaches, dünnwandiges Gebilde ist. Die Lichtleitflächen bilden große Seitenflächen des Lichtleiters. Dies schließt nicht aus, dass der dünnwandige Lichtleiter eine geringfügige Wölbung aufweist und sich nicht vollständig eben erstreckt. Denkbar ist insbesondere, dass der Lichtleiter in Schnitten senkrecht zum Strahlengang betrachtet, gewölbt verläuft. Die vordere Schmalseite kann dann als Lichtaustrittsfläche dienen. Dadurch kann ein designtechnisch interessanter, optischer Eindruck eines erleuchteten, gewölbt verlaufenden Bandes erzielt werden. Auch können im Verlauf des Lichtleiters Umlenkstufen vorgesehen sein, wenn die Einbauverhältnisse dies erforderlich machen.

Die Umlenkfläche ist zur Reflexion von Licht ausgebildet. Sie ist vorzugsweise als eine Materialgrenzfläche des Lichtleiters ausgebildet. Hierunter wird ein Übergang zwischen dem Material des Lichtleiters (vorzugsweise ein transparenter Kunststoff wie Polymethylmethacrylat (PMMA) oder Polycarbonat (PC) oder Glas, und einem anderen Medium (z.B. Luft) verstanden. Die Materialgrenzfläche kann außenliegend sein, d.h. eine äußere Grenzfläche des Lichtleiters sein. Die Materialgrenzfläche kann jedoch auch innenliegend sein, d.h. als Übergang zu einem innen liegenden Hohlraum oder einem eingeschlossenen Reflexionskörper, wie unten noch beispielhaft beschrieben.

Die Umlenkfläche weist vorzugsweise ein Umlenkzentrum auf, in welchen die Umlenkfläche bzw. jeweilige Reflexionsflächenabschnitte der Umlenkfläche einen Extremalpunkt aufweisen. Die Umlenkfläche ist im Bereich des Umlenkzentrums derart ausgebildet, dass Licht, welches durch die Lichteinkoppelfläche eingekoppelt ist und auf die Umlenkfläche trifft, radial von dem Umlenkzentrum weg auf die Sammelreflexionsfläche oder zumindest teilweise in Richtung des Lichtaustrittsabschnitts gelenkt wird. Insbesondere verläuft die Umlenkfläche im Bereich des Umlenkzentrums in der Art einer Spitze oder einer Rundung, insbesondere kegelförmig, zusammen.

Die Umlenkfläche kann als Vertiefung in einer Grenzfläche des Lichtleiters, beispielsweise einer der großen Lichtleitflächen ausgebildet sein, wobei die Vertiefung einen das Umlenkzentrum bildenden Extremalpunkt aufweist.

Nach einer vorteilhaften Ausgestaltung weist die Umlenkfläche eine Mehrzahl von voneinander beabstandeten Vertiefungen in einer der Lichtleitflächen auf, wobei je eine Vertiefung einen Reflexionsflächenabschnitt bildet und daher je einer Lichtquelle zugeordnet ist.

Die Umlenkfläche muss jedoch nicht als Vertiefung einer Lichtleitfläche ausgebildet sein. Denkbar ist auch (siehe oben), dass die Umlenkfläche als eine im Lichtleiter innenliegende, geschlossene Materialgrenzfläche ausgebildet ist, insbesondere als Materialgrenzfläche zu einem innenliegenden Hohlraum oder einem innenliegenden Formkörper aus einem anderen Material. Dabei weist die geschlossene Materialgrenzfläche gegenüberliegende Flächenabschnitte auf, welche den jeweils gegenüberliegenden Lichtleitflächen des Lichtleiters zugewandt sind. Diese gegenüberliegenden Flächenabschnitte können die verschiedenen Reflexionsflächenabschnitte bilden, welche jeweils einer Lichtquelle zugeordnet sind.

Vorzugsweise weist die innenliegende Materialgrenzfläche zwei gegenüberliegende Extremalpunkte oder Spitzen auf, die jeweils einer der gegenüberliegenden Lichtleitflächen zugewandt sind. Insbesondere weist die Umlenkfläche die Form eines Doppelkegels auf, wobei die Kegelspitzen in entgegengesetzte Richtungen auf jeweils eine Lichtleitfläche weisen.

Die Lichteinkopplung kann dann durch die Lichtleitflächen jeweils im Bereich der Kegelspitzen erfolgen, d.h. die Lichteinkoppelfläche wird durch die der innenliegenden Materialgrenzfläche jeweils gegenüberliegenden Bereiche der Lichtleitflächen gebildet. Auf diese Weise kann die Beleuchtungseinrichtung von mehreren Lichtquellen auf gegenüberliegenden Seiten des Lichtleiters gespeist werden. Durch die innenliegende Materialgrenzfläche wird ein virtuelles Abstrahlzentrum im Innern des Lichtleiters definiert, von dem die Lichtstrahlen zu dem Lichtaustrittsabschnitt oder zu der Sammelreflexionsfläche und dann zum Lichtaustrittsabschnitt geführt werden.

Zur Herstellung eines Lichtleiters mit innenliegendem Hohlraum kann der Lichtleiter zweiteilig aufgebaut sein. Beispielsweise können zwei Teillichtleiter, welche jeweils eine Vertiefung an einer Verbindungsoberfläche aufweisen, entlang dieser Verbindungsoberfläche miteinander verbunden, z.B. verklebt oder verschmolzen, werden, so dass der innenliegende Hohlraum von den aneinander anstoßenden Vertiefungen gebildet ist. Die Umlenkfläche kann aber auch durch einen Übergang zu einem in dem Lichtleiter eingeschlossenen Reflexionskörper, beispielsweise einem Körper aus einem anderen Material als der Lichtleiter, ausgebildet sein. Ein solcher Körper kann beispielsweise in den Lichtleiter bei der Herstellung eingegossen werden.

Nach einem grundsätzlichen Aspekt der Erfindung weist die Umlenkfläche einen rotationssymmetrischen räumlichen Verlauf auf. Dadurch wird das auf die Umlenkfläche eingestrahlte Licht im Wesentlichen radial abgestrahlt. Durch die Sammelreflexionsfläche werden dann die rückwärtigen oder lateralen Anteile ebenfalls nach vorne umgelenkt. Denkbar ist jedoch auch eine asymmetrische Ausgestaltung der Umlenkfläche, wodurch die Lichtverteilung gezielt geformt werden kann.

Die Sammelreflexionsfläche umfasst eine rückwärtige Schmalseitenfläche des Lichtleiters. Sie kann jedoch auch über die rückwärtige Schmalseitenfläche ausgedehnt sein. Insbesondere umgreift die Sammelreflexionsfläche die Lichteinkoppeleinrichtung rückwärtig und lateral. Die Sammelreflexionsfläche kann sich zusätzlich auch an die rückwärtige Schmalseitenfläche anschließend als seitliche Schmalseitenfläche nach vorne in Richtung des Lichtaustrittsabschnitts erstrecken.

In der Erstreckungsfläche des Lichtleiters betrachtet weist die Sammelreflexionsfläche vorzugsweise einen parabelförmigen Verlauf mit einem Brennpunkt auf. Dabei ist vorzugsweise ein Reflexionsflächenabschnitt der Umlenkfläche oder die Umlenkfläche mit ihrem Umlenkzentrum im Bereich des Brennpunktes der Parabel angeordnet. Diese Ausgestaltung ermöglicht es, das eingekoppelte Licht bei der Umlenkung zu dem Lichtaustrittsabschnitt zu kollimieren. Denkbar ist jedoch auch, dass die Sammelreflexionsfläche in der Erstreckungsfläche des Lichtleiters betrachtet einen hyperbelförmigen, ellipsenförmigen oder allgemein einen kegelschnittähnlichen Verlauf aufweist. Dadurch können gezielt divergierende oder konvergierende Strahlbündel erzeugt werden.

Nach einer vorteilhaften Ausgestaltung ist die Sammelreflexionsfläche dazu eingerichtet, das von der Umlenkfläche umgelenkte Licht zweifach umzulenken und insgesamt die Richtung des auf die Sammelreflexionsfläche auftreffenden Lichtes umzukehren, wobei die Umlenkung derart erfolgt, dass der weitere Weg des umgelenkten Lichtes an der Umlenkfläche vorbei, vorzugsweise zwischen der Umlenkfläche und einer gegenüberliegenden Lichtleitfläche hindurch durch den Lichtleiter zu dem Lichtaustrittsabschnitt führt. Dadurch wird ein störender Einfluss der Umlenkfläche auf das von der Sammelreflexionsfläche eingesammelte Licht vermieden.

In Schnitten senkrecht zur Erstreckungsfläche des Lichtleiters weist die Sammelreflexionsfläche vorzugsweise einen V-förmigen Verlauf auf, wobei die Spitze des V nach außen, insbesondere von der Lichteinkoppeleinrichtung und dem Lichtaustrittsabschnitt weg, weist. Vorzugsweise schließen die Schenkel des V einen Winkel von im Wesentlichen 90° miteinander ein, wobei je ein Schenkel des V mit der an ihn angrenzenden Lichtleitfläche einen stumpfen Winkel von ca. 135° einschließt. Insofern verläuft das "V" insbesondere spiegelsymmetrisch zwischen den zwei parallelen Lichtleitflächen. Diese Ausgestaltung führt dazu, dass ein auf einen Schenkel der im Schnitt V-förmigen Sammelreflexionsfläche auftreffender Lichtstrahl zunächst zum gegenüberliegenden Schenkel und dann zurück in den Lichtleiter reflektiert wird. Dadurch wird die Richtung des Lichtstrahls umgekehrt, wobei der Lichtstrahl durch die doppelte Reflexion an der Sammelreflexionsfläche versetzt zurückgeführt wird und so an der Umlenkfläche vorbeigeführt werden kann.

Die Lichtleitflächen verlaufen vorzugsweise zumindest in einem an den Lichtaustrittsabschnitt anschließenden Bereich des Lichtleiters parallel zueinander. Dadurch weist der Lichtleiter im Wesentlichen eine plattenartige Form auf.

Die Lichtquellen der Beleuchtungseinrichtung sind grundsätzlich derart angeordnet, dass ihr Licht möglichst vollständig durch die Lichteinkoppelfläche in den Lichtleiter einkoppelbar ist. Hierzu sind die Lichtquellen insbesondere in einem sehr kleinen Abstand zu der Lichteinkoppelfläche angeordnet, beispielsweise kleiner als ein Millimeter.

Die Lichteinkoppeleinrichtung kann eine Mehrzahl von Lichteinkoppelflächen umfassen und funktional in diese unterteilt sein. Denkbar ist beispielsweise, dass eine Mehrzahl von voneinander beabstandeten Lichteinkoppelflächen vorgesehen ist, wobei je einer Lichteinkoppelfläche jeweils eine Lichtquelle oder eine Gruppe von Lichtquellen zugeordnet ist. Die verschiedenen Lichteinkoppelflächen können beispielsweise an gegenüberliegenden Seiten des Lichtleiters, z.B. als Bereiche der gegenüberliegenden Lichtleitflächen ausgebildet sein. Dies ist insbesondere vorteilhaft, wenn die Umlenkfläche als eine geschlossene, im Lichtleiter innenliegende Übergangsfläche ausgebildet ist, wie oben beschrieben. Denkbar ist jedoch auch, dass verschiedene Lichteinkoppelflächen an verschiedenen Lichtleitarmen vorgesehen sind.

Die Lichteinkoppelfläche kann jedoch auch zusammenhängend ausgebildet sein und aus mehreren, aneinander anschließenden Lichteinkoppelflächenabschnitten bestehen, wobei je eine Lichtquelle derart angeordnet ist, dass das von ihr ausstrahlbare Licht ausschließlich durch je einen zugeordneten Lichteinkoppelflächenabschnitt in den Lichtleiter eingekoppelt wird.

Weitere Einzelheiten und vorteilhafte Ausgestaltungen der Erfindung werden im Folgenden unter Bezugnahme auf die Figuren erläutert.

Es zeigen:
- Figur 1: skizzierte Darstellung einer Beleuchtungseinrichtung im Längsschnitt senkrecht zur Erstreckungsfläche des Lichtleiters;
- Figur 2: skizzierte Darstellung einer wiederum weiteren Beleuchtungseinrichtung im Längsschnitt senkrecht zur Erstreckungsfläche des Lichtleiters;
- Figur 3: skizzierte Darstellung einer weiteren Beleuchtungseinrichtung in Draufsicht parallel zur Erstreckung des Lichtleiters.

In der folgenden Beschreibung und in den Figuren sind für identische oder aneinander entsprechende Merkmale jeweils dieselben Bezugszeichen verwendet.

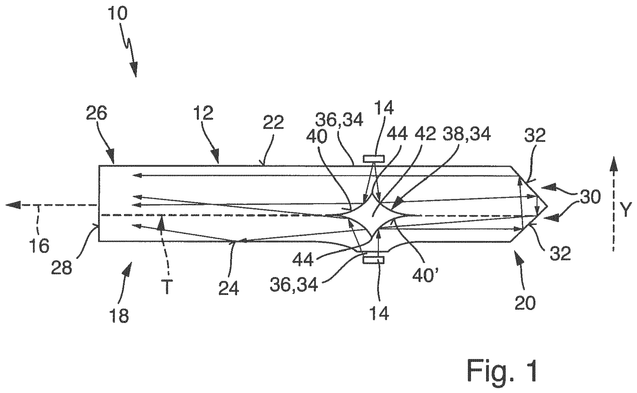

Die Figur 1 zeigt eine Kfz-Beleuchtungseinrichtung 10, umfassend einen Lichtleiter 12 und eine Mehrzahl von Lichtquellen 14 (im dargestellten Beispiel zwei Lichtquellen 14). Der Lichtleiter 12 ist flach, sich plattenartig erstreckend ausgebildet und in der Figur 1 im Längsschnitt senkrecht zu seiner Erstreckungsfläche und entlang einer Hauptabstrahlrichtung 16 der Beleuchtungseinrichtung 10 dargestellt. Der Lichtleiter 12 weist einen vorderseitigen Abschnitt 18 und einen rückwärtigen Abschnitt 20 auf.

Der plattenartige Lichtleiter 12 weist zwei großflächige Seiten auf, gebildet von einer ersten Lichtleitfläche 22 und einer dieser gegenüberliegenden zweiten Lichtleitfläche 24. Die Lichtleitflächen 22 und 24 begrenzen den Lichtleiter derart, dass Licht unter interner Totalreflexion von dem rückwärtigen Abschnitt 20 zu dem vorderseitigen Abschnitt 18 geleitet werden kann.

An dem vorderseitigen Abschnitt 18 ist ein Lichtaustrittsabschnitt 26 des Lichtleiters 12 vorgesehen, welcher eine Lichtaustrittsfläche 28 umfasst, die von einer vorderen, den Lichtleiter begrenzenden Schmalseitenfläche gebildet ist.

In der Längsschnittdarstellung gemäß Figur 1 rückwärtig dargestellt weist der Lichtleiter 12 eine Sammelreflexionsfläche 30 auf. Diese umfasst im Längsschnitt senkrecht zu der Erstreckung des flächigen Lichtleiters 12 betrachtet, zwei gewinkelt zueinander verlaufende rückwärtige Schmalseitenflächen 32 des Lichtleiters 12. Die Schmalseitenflächen begrenzen den Lichtleiter 12 in der von dem Lichtaustrittsabschnitt 26 abgewandten Richtung. Außerhalb der Zeichenebene in Figur 1 setzt sich die Sammelreflexionsfläche in Richtung zu dem Lichtaustrittsabschnitt 26 fort und weist in Schnittebenen parallel zu der Erstreckungsfläche des Lichtleiters 12 beispielsweise einen parabelförmigen Verlauf auf.

Zum Einkoppeln des Lichtes der Lichtquellen 14 in den Lichtleiter 12 weist dieser eine Lichteinkoppeleinrichtung 34 auf. Diese ist in zwei Lichteinkoppelflächen 36 funktional unterteilt, durch welche das Licht jeweils einer zugeordneten Lichtquelle in den Lichtleiter 12 eingestrahlt werden kann. Die funktionale Unterteilung der Lichteinkoppelflächen 36 ergibt sich im dargestellten Beispiel dadurch, dass Bereiche der Lichtleitflächen 22, 24 definiert sind, welche jeweils den Lichtquellen 14 unmittelbar gegenüberliegen.

Die Lichteinkoppeleinrichtung 34 umfasst außerdem eine Umlenkfläche 38, welche dazu eingerichtet ist, das durch die Lichteinkoppelfläche 36 in den Lichtleiter eingekoppelte Licht derart umzulenken, dass ein Anteil des Lichtes nach Reflexion an der Umlenkfläche 38 zu dem Lichtaustrittsabschnitt 26 hin, ein anderer Anteil des Lichtes zu der Sammelreflexionsfläche 30 hin umgelenkt wird.

Die Umlenkfläche 38 weist mehrere, im dargestellten Beispiel zwei Reflexionsflächenabschnitte 40, 40' auf, welche zusammen die Umlenkfläche 38 bilden. Insofern lässt sich die Umlenkfläche 38 funktional in die Reflexionsflächenabschnitte 40, 40' unterteilen. Die Reflexionsflächenabschnitte 40, 40' zeichnen sich dadurch aus, dass je einer der Reflexionsflächenabschnitte 40, 40' gerade einer Lichtquelle 14 zur Umlenkung des von ihr ausgestrahlten Lichts zugeordnet ist. Im dargestellten Beispiel ist die Reflexionsfläche 40 derjenigen Lichtquelle 14 zugeordnet, welche Licht durch die obere Lichtleitfläche 22 in den Lichtleiter einstrahlt. Die Reflexionsfläche 40' ist der gegenüberliegenden Lichtquelle 14 zugeordnet, welche Licht durch die Lichtleitfläche 24 in den Lichtleiter 12 einstrahlt.

Im dargestellten Beispiel ist die Umlenkfläche 38 als eine Materialgrenzfläche des Lichtleiters 12 ausgebildet, welche einen innenliegenden Hohlraum 42 begrenzt. Insofern ist die Umlenkfläche 38 als eine im Lichtleiter 12 innenliegende, in sich geschlossene Grenzfläche zu dem innenliegenden Hohlraum 42 ausgebildet.

Ein derartiger Lichtleiter 12 kann dadurch hergestellt werden, dass zwei Teillichtleiter, welche jeweils eine Verbindungsoberfläche aufweisen (in Figur 1 als gestrichelte Trennlinie T dargestellt), wobei die Teillichtleiter entlang ihrer Verbindungsfläche miteinander verbunden werden, z.B. durch Verkleben oder Laminieren oder Verschmelzen. Die beiden Teillichtleiter weisen an ihrer Verbindungsoberfläche jeweils Vertiefungen auf, welche beim Zusammensetzen der Teillichtleiter den Hohlraum 42 definieren.

Die Umlenkfläche 38 ist vorzugsweise rotationssymmetrisch ausgebildet. Insbesondere weist jeder der Reflexionsflächenabschnitte 40, 40' ein in der Art einer Spitze ausgebildetes Umlenkzentrum 44 auf. Die Spitze kann auch abgerundet sein. In dem Umlenkzentrum 44 läuft der jeweilige Reflexionsflächenabschnitt 40, 40' vorzugsweise konusartig zusammen. Dabei ist die Umlenkfläche 38 derart ausgestaltet, dass je ein Umlenkzentrum 44 einer Lichteinkoppelfläche 36 und damit einer Lichtquelle 14 zugewandt ist und sich die Reflexionsflächenabschnitte 40 ausgehend von dem Umlenkzentrum 44 von der jeweiligen Lichteinkoppelfläche 36 (und der jeweiligen Lichtquelle 14) weg erstrecken. Die innenliegende Umlenkfläche 38 kann beispielsweise in der Art eines Doppelkegels ausgestaltet sein, wobei je eine Kegelspitze (ggf. abgerundet) eines der Umlenkzentren 44 bildet und jeweils einer Lichtquelle 14 zugewandt ist.

Die rückwärtigen Schmalseitenflächen 32 der Sammelreflexionsfläche 30 sind vorzugsweise derart zueinander gewinkelt, dass Lichtstrahlen, welche von einem Reflexionsflächenabschnitt (z.B. Bezugszeichen 40) auf eine der rückwärtigen Schmalseitenflächen 32 gelenkt werden, zunächst auf die weitere, gewinkelt hierzu verlaufende rückwärtige Schmalseitenfläche 32 gelenkt werden und nach dortiger Reflexion an der Umlenkfläche 38 vorbei zu dem Lichtaustrittsabschnitt 26 geführt werden.

Die in der Figur 1 dargestellte Ausgestaltung mit der innenliegenden Umlenkfläche 38 führt dazu, dass das innenliegende, geschlossene Flächengebilde der Umlenkfläche 38 effektiv als eine innenliegende, radial abstrahlende Lichtquelle wirkt, welche von den beiden Lichtquellen 14 auf gegenüberliegenden Seiten des Lichtleiters 12 gespeist wird.

Die Lichteinkoppelfläche 36 kann an einem geringfügig über die Erstreckungsfläche des Lichtleiters 12 hervorgewölbten Abschnitt der jeweiligen Lichtleitfläche 22, 24 vorgesehen sein, wie dies im dargestellten Beispiel für die Lichteinkoppelfläche 36 an der Lichtleitfläche 24 der Fall ist.

Grundsätzliche können die Lichtquellen 14 mit Bündeloptiken oder optischen Einrichtungen versehen sein, um die Divergenz des abgestrahlten Lichtbündel zu verringern, dass das abgestrahlte Licht der Lichtquelle nahezu vollständig auf die jeweilige Fläche 38 trifft.

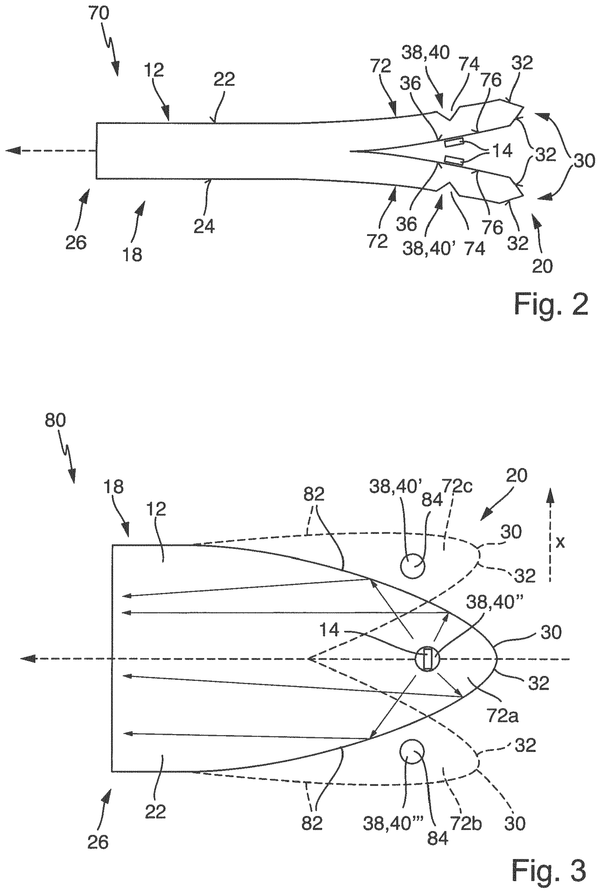

Die Figur 2 zeigt eine Kfz-Beleuchtungseinrichtung 70 mit einem Lichtleiter 12, der sich ausgehend von seinem Lichtaustrittsabschnitt 26 plattenartig erstreckt. In der zum Lichtaustrittsabschnitt 26 entgegengesetzten Richtung (zum rückwärtigen Abschnitt 20) weist der Lichtleiter 12 zwei voneinander separat verlaufende Lichtleitarme 72 auf. Die Lichtleitarme 72 münden gemeinsam in den plattenartigen Abschnitt des Lichtleiters 12, der sich an den Lichtaustrittsabschnitt 26 anschließt.

Die Sammelreflexionsfläche 30 ist in diesem Fall auf die mehreren Lichtleitarme 72 aufgeteilt. Jeder der Lichtleitarme 72 weist rückwärtige Schmalseitenflächen 32 auf, welche zu der Sammelreflexionsfläche 30 beitragen. Jeder der Lichtleitarme 72 trägt insofern einen Abschnitt der Sammelreflexionsfläche 30.

Die Lichtleitarme 72 sind vorzugsweise jeweils ebenfalls plattenartig ausgebildet und verlaufen in dem in Figur 2 dargestellten Beispiel schichtartig übereinander (d. h. liegen in Schnitten senkrecht zur Erstreckungsfläche des Lichtleiters 12 betrachtet nebeneinander).

Die Umlenkfläche 38 ist bei der Ausgestaltung gemäß Figur 2 nicht zusammenhängend ausgestaltet. Vielmehr umfasst die Umlenkfläche 38 mehrere (hier: zwei) Vertiefungen 74 in denjenigen Begrenzungsflächen der Lichtleitarme 72, welche in die obere Lichtleitfläche 22 bzw. die untere Lichtleitfläche 24 übergehen. Jede Vertiefung 74 bildet einen Reflexionsflächenabschnitt 40 bzw. 40' der Umlenkfläche 38. Insofern ist an je einem Lichtleitarm 72 ein Reflexionsflächenabschnitt 40, 40' angeordnet. Denkbar ist auch, dass ein oder mehrere Lichtleitarme 72 jeweils mehrere Reflexionsflächenabschnitte 40, 40' (Vertiefungen 74) aufweist.

Die schichtartig übereinanderliegenden Lichtleitarme 72 weisen einander zugewandte Zwischenflächen 76 auf, welche in Richtung zu dem Lichtaustrittsabschnitt 26 zusammenlaufen und sich miteinander verbinden. Diese Zwischenflächen 76 bzw. Abschnitte dieser Zwischenflächen 76, bilden Lichteinkoppelflächen 36 für Lichtquellen 14, welche zwischen den Lichtleitarmen 72 angeordnet werden können. Dabei liegt eine Lichteinkoppelfläche 36 jeweils an dem Lichtleitarm 72 gegenüber einer Vertiefung 74, welche als Reflexionsflächenabschnitt 40 bzw. 40' wirkt. Anders als im dargestellten Beispiel ist denkbar, dass die Vertiefungen 74 an den Zwischenflächen 76 und die Lichteinkoppelflächen 36 an den außenseitigen Flächen der Lichtleitarme 72 angeordnet sind.

Die Figur 3 zeigt eine weitere Kfz-Beleuchtungseinrichtung 80 in Draufsicht auf die Erstreckungsfläche des Lichtleiters 12.

Ausgehend von seinem vorderseitigen Lichtaustrittsabschnitt 26 erstreckt sich der Lichtleiter 12 plattenartig und läuft in rückwärtige Richtung in mehrere, separat voneinander verlaufende Lichtleitarme 72a, 72b, 72c aus. Diese sind bezüglich der Erstreckungsfläche des Lichtleiters 12 in zwei übereinander liegenden Schichten angeordnet (ähnlich Figur 2). Dabei verläuft in der Darstellung der Figur 3 der Lichtleitarm 72a in der oberen Schicht, die Lichtleitarme 72b, 72c in einer unteren Schicht.

Die unteren Lichtleitarme 72b, 72c verlaufen in der Erstreckungsfläche des Lichtleiters 12 betrachtet nebeneinander und laufen in einen an den Lichtaustrittsabschnitt 26 anschließenden Bereich des Lichtleiters 12 zusammen.

Jeder der Lichtleitarme 72a, 72b, 72c weist zumindest einen Reflexionsflächenabschnitt 40, 40', 40" der Umlenkfläche 38 auf. Die Reflexionsflächenabschnitte 40, 40', 40" können wiederum als Vertiefungen in einer der Lichtleitflächen 22, 24 ausgebildet sein (vgl. Figur 2). Außerdem weist jeder Lichtleitarm 72a, 72b, 72c eine Lichteinkoppelfläche 36 für die jeweils zugeordnete Lichtquelle 14 auf, wie vorstehend zu den verschiedenen Ausgestaltungen näher erläutert.

In der Draufsicht gemäß Figur 3 ist ein grundlegender Aspekt der Erfindung erkennbar, wonach die Sammelreflexionsfläche 30 zusätzlich zu den rückwärtigen Schmalseitenflächen 32 (welche den Lichtleiter 12 in der zu dem Lichtaustrittsabschnitt 26 entgegengesetzten Richtung begrenzen) auch an die rückwärtigen Schmalseitenflächen 32 anschließende seitliche Schmalseitenflächen 82 umfassen können. Die seitlichen Schmalseitenflächen 82 erstrecken sich ausgehend von dem rückwärtigen Abschnitt des Lichtleiters 12 (bzw. der Lichtleitarme 72a, 72b, 72c) nach vorne in Richtung des Lichtaustrittsabschnitts 26. In der Erstreckungsfläche des Lichtleiters 12 betrachtet weist die Sammelreflexionsfläche 30 an jedem der Lichtleitarme 72a, 72b, 72c einen parabelförmigen Verlauf auf. Der jeweiligen Parabel kann ein Brennpunkt 84 zugeordnet werden. Vorzugsweise ist die Umlenkfläche 38 bzw. der jeweilige Reflexionsflächenabschnitt 40, 40', 40" im Bereich des Brennpunktes 84 des jeweiligen Lichtleitarms 72a, 72b, 72c angeordnet. Dadurch kann das von der Umlenkfläche 38 jeweils ausgehende Licht über die parabelförmigen Abschnitte der Sammelreflexionsfläche 30 Licht vor Austritt durch den Lichtaustrittsabschnitt 26 kollimiert werden.

Die den verschiedenen Reflexionsflächenabschnitte 40, 40', 40" zugeordneten Lichtquellen 14 können auch bei der Ausgestaltung gemäß Figur 3 in einer gemeinsamen Ebene angeordnet sein. Hierzu kann z.B. der Lichtleitarm 72a der oberen Schicht einen nach unten in Richtung der unteren Schicht abragenden Lichteinkoppelvorsprung aufweisen, welcher die Lichteinkoppelfläche 36 des oberen Lichtleitarms 72a aufweist und welcher vorzugsweise derart bemessen ist, dass die Lichteinkoppelflächen 36 der Lichtleitarme 72b, 72c in einer Ebene mit der Lichteinkoppelfläche 36 des Lichtleitarms 72 liegt.

## Patentansprüche

1. Kraftfahrzeug-Beleuchtungseinrichtung (10, 70, 80), insbesondere Kraftfahrzeug-Scheinwerfer,
- mit einem plattenartig flach ausgebildeten Lichtleiter (12) aufweisend eine erste Lichtleitfläche (22) und eine dieser gegenüberliegende zweite Lichtleitfläche (24), welche den Lichtleiter (12) begrenzen,
- mit einem vorderseitigen Lichtaustrittsabschnitt (26),
- mit einer Sammelreflexionsfläche (30), welche zumindest eine den Lichtleiter rückwärtig begrenzende Schmalseitenfläche (32) umfasst,
- mit einer Lichteinkoppeleinrichtung (34) umfassend wenigstens eine Lichteinkoppelfläche (36) und eine Umlenkfläche (38), welche dazu eingerichtet ist, durch die Lichteinkoppelfläche (36) auf die Umlenkfläche (38) einstrahlbares Licht zu der Sammelreflexionsfläche (30) umzulenken,
wobei die Sammelreflexionsfläche (30) derart ausgebildet ist, dass das von der Umlenkfläche (38) auf die Sammelreflexionsfläche (30) gerichtete Licht zu dem Lichtaustrittsabschnitt (26) umgelenkt wird,
wobei die Lichteinkoppeleinrichtung (34) zwischen der Sammelreflexionsfläche (30) und dem Lichtaustrittsabschnitt (26) angeordnet ist, und dass eine Mehrzahl von Lichtquellen (14) vorgesehen ist und dass die Umlenkfläche (38) in eine entsprechende Mehrzahl von Reflexionsflächenabschnitten (40, 40', 40", 40"') unterteilt ist,
wobei je einer der Reflexionsflächenabschnitte (40, 40') gerade einer Lichtquelle (14) zur Umlenkung des von dieser ausgestrahlten Lichts zugeordnet ist, derart, dass zumindest ein Anteil des durch die Lichteinkoppelfläche (36) eingekoppelten Lichts der jeweiligen Lichtquelle (14) über den zugeordneten Reflexionsflächenabschnitt (40, 40', 40"') zu der Sammelreflexionsfläche (30) gelenkt wird,
wobei der Lichtleiter (12) eine Mehrzahl von separat voneinander verlaufenden Lichtleitarmen (72; 72a, 72b, 72c) aufweist, wobei jeder Lichtleitarm (72; 72a, 72b, 72c) einen Abschnitt der Sammelreflexionsfläche (30) und mindestens einen Reflexionsflächenabschnitt (40, 40') der Umlenkfläche (38) aufweist,
**dadurch gekennzeichnet, dass** die Lichtleitarme (72; 72a, 72b, 72c) schichtartig übereinander liegen und in Richtung zum Lichtaustrittsabschnitt hin zusammenlaufen.

2. Einrichtung (10, 70, 80) nach einem der vorherigen Ansprüche, **dadurch gekennzeichnet, dass** die Umlenkfläche (38) wenigstens ein Umlenkzentrum (44) aufweist, in dem die Umlenkfläche (38) oder der jeweilige Reflexionsflächenabschnitt (40, 40') einen Extremalpunkt bildet und derart ausgebildet ist, dass durch die Lichteinkoppelfläche (36) eingekoppeltes Licht radial von dem Umlenkzentrum (44) weg auf die Sammelreflexionsfläche (30) umlenkbar ist.

3. Einrichtung (70, 80) nach einem der vorherigen Ansprüche, **dadurch gekennzeichnet, dass** die Umlenkfläche (38) eine Mehrzahl von voneinander beabstandeten Vertiefungen (74) in der Lichtleitfläche (22, 24) umfasst, wobei je eine Vertiefung (74) einen Reflexionsflächenabschnitt (40, 40') bildet und je einer Lichtquelle (14) zugeordnet ist.

4. Einrichtung (10) nach einem der Ansprüche 1 - 3, **dadurch gekennzeichnet, dass** die Umlenkfläche (38) als im Lichtleiter (12) innenliegende, geschlossene Materialgrenzfläche, insbesondere eine Materialgrenzfläche zu einem innenliegenden Hohlraum (42) oder Formkörper, ausgebildet ist, wobei die den gegenüberliegenden Lichtleitflächen (22, 24) zugewandten Abschnitte der innenliegenden Materialgrenzfläche verschiedene Reflexionsflächenabschnitte (40, 40') der Umlenkfläche (38) bilden.

5. Einrichtung (10, 70, 80) nach einem der vorherigen Ansprüche, **dadurch gekennzeichnet, dass** die Sammelreflexionsfläche (30) außerdem eine seitliche Schmalseitenfläche (82) umfasst, welche sich an die rückwärtige Schmalseitenfläche (32) anschließend nach vorne in Richtung des Lichtaustrittsabschnitts (26) erstreckt.

6. Einrichtung (10, 70, 80) nach einem der vorherigen Ansprüche, **dadurch gekennzeichnet, dass** die Sammelreflexionsfläche (30) in der Erstreckungsfläche des Lichtleiters (12) betrachtet einen parabelförmigen Verlauf mit einem Brennpunkt (84) aufweist, wobei wenigstens ein Reflexionsflächenabschnitt (40, 40', 40", 40"') oder die Umlenkfläche (38) im Bereich des Brennpunktes (84) angeordnet ist.

7. Einrichtung (10, 70, 80) nach einem der vorherigen Ansprüche, **dadurch gekennzeichnet, dass** die Lichtleitflächen (22, 24), zumindest in einem an den Lichtaustrittsabschnitt (26) anschließenden Abschnitt des Lichtleiters (12), parallel zueinander verlaufen.

8. Einrichtung (10, 70, 80) nach einem der vorherigen Ansprüche, **dadurch gekennzeichnet, dass** eine Mehrzahl von voneinander beabstandeten Lichteinkoppelflächen (36) vorgesehen ist, wobei je einer Lichteinkoppelfläche (36) jeweils eine Lichtquelle (14) oder eine Gruppe von Lichtquellen zugeordnet ist.

9. Einrichtung nach einem der Ansprüche 1 bis 7, **dadurch gekennzeichnet, dass** die Lichteinkoppelfläche (36) aus mehreren unmittelbar aneinander anschließenden Lichteinkoppelflächenabschnitten (36', 36") besteht, wobei je eine Lichtquelle (14) derart angeordnet ist, dass das von ihr ausstrahlbare Licht ausschließlich durch je einen zugeordneten Lichteinkoppelflächenabschnitt (36', 36") in den Lichtleiter einkoppelbar ist.

## Claims

1. Motor vehicle lighting device (10, 70, 80), in particular a motor vehicle headlight, comprising
- a flat plate-like light guide (12) which has a first light guiding surface (22) and a second light guiding surface (24) opposite the first light guiding surface, which define the light guide (12),
- a front light-emitting portion (26),
- a collecting reflection surface (30) which comprises at least one short side surface (32) which defines the light guide at the rear,
- a light coupling device (34) which comprises at least one light coupling surface (36) and one deflection surface (38) which is designed to deflect light which can be irradiated through the light coupling surface (36) onto the deflection surface (38) to the collecting reflection surface (30),
the collecting reflection surface (30) being formed such that the light directed from the deflection surface (38) onto the collecting reflection surface (30) is deflected to the light outlet portion (26),
the light coupling device (34) being arranged between the collecting reflection surface (30) and the light outlet portion (26), a plurality of light sources (14) being provided and the deflection surface (38) being divided into a corresponding plurality of reflection surface portions (40, 40', 40", 40"'), each of the reflection surface portions (40, 40') being assigned to a light source (14) in order to deflect the light emitted thereby in such a way that at least a fraction of the light from the relevant light source (14) that is coupled in by the light coupling surface (36) is deflected to the collecting reflection surface (30) via the assigned reflection surface portion (40, 40', 40"'), the light guide (12) having a plurality of light guide arms (72; 72a, 72b, 72c) which extend separately from one another, each light guide arm (72; 72a, 72b, 72c) comprising a portion of the collecting reflection surface (30) and at least one reflection surface portion (40, 40') of the deflection surface (38), **characterized in that** the light guide arms (72; 72a, 72b, 72c) are layered one on top of the other and converge toward the light outlet portion.

2. Device (10, 70, 80) according to the preceding claim, **characterized in that** the deflection surface (38) has at least one deflection center (44) in which the deflection surface (38) or the relevant reflection surface portion (40, 40') forms an extreme point and is designed in such a way that light coupled in by the light coupling surface (36) can be radially deflected away from the deflection center (44) onto the collecting reflection surface (30).

3. Device (70, 80) according to either of the preceding claims, **characterized in that** the deflection surface (38) comprises a plurality of mutually spaced recesses (74) in the light guiding surface (22, 24), each recess (74) forming a reflection surface portion (40, 40') and each recess being assigned to a light source (14).

4. Device (10) according to any of claims 1 to 3, **characterized in that** the deflection surface (38) is designed as a closed material interface located inside the light guide (12), in particular as a material interface to an internal cavity (42) or shaped body, the portions of the internal material interface that face the opposite light guiding surfaces (22, 24) forming different reflection surface portions (40, 40') of the deflection surface (38).

5. Device (10, 70, 80) according to any of the preceding claims, **characterized in that** the collecting reflection surface (30) further comprises a lateral short side surface (82) which extends adjacently to the rear short side surface (32), forward toward the light output portion (26).

6. Device (10, 70, 80) according to any of the preceding claims, **characterized in that** the collecting reflection surface (30), when viewed in the extension plane of the light guide (12), has a parabolic shape comprising a focal point (84), at least one reflection surface portion (40, 40', 40", 40"') or the deflection surface (38) being arranged in the region of the focal point (84).

7. Device (10, 70, 80) according to any of the preceding claims, **characterized in that** the light guiding surfaces (22, 24) extend in parallel with one another, at least in a portion of the light guide (12) which adjoins the light outlet portion (26).

8. Device (10, 70, 80) according to any of the preceding claims, **characterized in that** a plurality of mutually spaced light coupling surfaces (36) are provided, a light source (14) or a group of light sources being assigned to each light coupling surface (36).

9. Device according to any of claims 1 to 7, **characterized in that** the light coupling surface (36) consists of a plurality of light coupling surface portions (36', 36") which directly adjoin one another, each light source (14) being arranged in such a way that the light which can be emitted thereby can be coupled into the light guide, exclusively by means of an assigned light coupling surface portion (36', 36").

## Revendications

1. Dispositif d'éclairage pour véhicule automobile (10, 70, 80), en particulier phare de véhicule automobile,
- comportant un guide optique (12) plat en forme de plaque comprenant une première surface de guidage optique (22) et une seconde surface de guidage optique (24) faisant face à ladite première surface, qui délimitent le guide optique (12),
- comportant une section de sortie optique antérieure (26),
- comportant une surface de réflexion collectrice (30) qui comprend au moins une surface latérale étroite (32) délimitant le guide optique à l'arrière,
- comportant un dispositif de couplage optique (34) comprenant au moins une surface de couplage optique (36) et une surface de déviation (38) conçue pour dévier vers la surface de réflexion collectrice (30) de la lumière pouvant être projetée sur la surface de déviation (38) via la surface de couplage optique (36),
dans lequel la surface de réflexion collectrice (30) est réalisée de telle manière que la lumière dirigée sur la surface de réflexion collectrice (30) à partir de la surface de déviation (38) est déviée vers la section de sortie optique (26),
dans lequel le dispositif de couplage optique (34) est agencé entre la surface de réflexion collectrice (30) et la section de sortie optique (26),
et de telle manière qu'une pluralité de sources de lumière (14) est prévue, et de telle manière que la surface de déviation (38) est subdivisée en une pluralité correspondante de sections de surface de réflexion (40, 40', 40", 40"'),
dans lequel chacune des sections de surface de réflexion (40, 40') est associée à précisément une source de lumière (14) pour dévier la lumière émise par ladite source de telle manière qu'au moins une partie de la lumière, couplée en entrée via la surface de couplage optique (36), de la source de lumière (14) respective est dirigée vers la surface de réflexion collectrice (30) par l'intermédiaire de la section de surface de réflexion (40, 40', 40''') associée,
dans lequel le guide optique (12) présente une pluralité de bras de guidage optique (72; 72a, 72b, 72c) s'étendant séparément les uns des autres, chaque bras de guidage optique (72; 72a, 72b, 72c) présentant une section de la surface de réflexion collectrice (30) et au moins une section de surface de réflexion (40, 40') de la surface de déviation (38),
**caractérisé en ce que** les bras de guidage optique (72; 72a, 72b, 72c) sont superposés en couches et convergent en direction de la section de sortie optique.

2. Dispositif (10, 70, 80) selon l'une des revendications précédentes, **caractérisé en ce que** la surface de déviation (38) présente au moins un centre de déviation (44) au sein duquel la surface de déviation (38) ou la section de surface de réflexion (40, 40') respective forme un point extrémal et est réalisée de telle manière que de la lumière couplée en entrée via la surface de couplage optique (36) peut être déviée de manière radiale sur la surface de réflexion collectrice (30) en s'éloignant du centre de déviation (44).

3. Dispositif (70, 80) selon l'une des revendications précédentes, **caractérisé en ce que** la surface de déviation (38) comprend une pluralité de renfoncements (74) espacés les uns des autres au sein de la surface de guidage optique (22, 24), dans lequel chaque renfoncement (74) forme une section de surface de réflexion (40, 40') et est associé à une source de lumière (14) respective.

4. Dispositif (10) selon l'une des revendications 1 à 3, **caractérisé en ce que** la surface de déviation (38) est réalisée en tant qu'interface matérielle fermée se trouvant dans le guide optique (12), en particulier en tant qu'interface matérielle par rapport à une cavité interne (42) ou un corps moulé interne, les sections de l'interface matérielle interne orientées vers les surfaces de guidage optique (22, 24) opposées formant différentes sections de surface de réflexion (40, 40') de la surface de déviation (38).

5. Dispositif (10, 70, 80) selon l'une des revendications précédentes, **caractérisé en ce que** la surface de réflexion collectrice (30) comprend en outre une surface latérale étroite (82) qui s'étend vers l'avant en direction de la section de sortie optique (26) dans la continuité de la surface latérale étroite (32) située vers l'arrière.

6. Dispositif (10, 70, 80) selon l'une des revendications précédentes, **caractérisé en ce que** la surface de réflexion collectrice (30) présente, considérée dans la surface d'extension du guide optique (12), un tracé parabolique muni d'un point focal (84), dans lequel au moins une section de surface de réflexion (40, 40', 40", 40"') ou la surface de déviation (38) est agencée dans la région du point focal (84).

7. Dispositif (10, 70, 80) selon l'une des revendications précédentes, **caractérisé en ce que** les surfaces de guidage optique (22, 24) s'étendent parallèlement les unes aux autres au moins dans une section du guide optique (12) située dans la continuité de la section de sortie optique (26).

8. Dispositif (10, 70, 80) selon l'une des revendications précédentes, **caractérisé en ce qu'**une pluralité de surfaces de couplage optique (36) espacées sont prévues, dans lequel chaque surface de couplage optique (36) est associée à respectivement une source de lumière (14) ou un groupe de sources de lumière.

9. Dispositif selon l'une des revendications 1 à 7, **caractérisé en ce que** la surface de couplage optique (36) est constituée de plusieurs sections de surface de couplage optique (36', 36") directement adjacentes, dans lequel chaque source de lumière (14) est agencée de telle manière que la lumière émise par ladite source peut être couplée en entrée dans le guide optique exclusivement par respectivement une section de surface de couplage optique (36', 36'') associée.
